Europäisches Patentamt

European Patent Office

Office européen des brevets

(19)

(11) Numéro de publication: **0 046 125**
**B1**

(12)                    FASCICULE DE BREVET EUROPEEN

(45) Date de publication du fascicule du brevet:
**27.03.85**

(51) Int. Cl.⁴: **H 01 J 47/02**

(21) Numéro de dépôt: **81401367.8**

(22) Date de dépôt: **04.10.79**

(60) Numéro de publication de la demande initiale en application de l'article 76 CBE:

(54) **Détecteur de rayonnement.**

(30) Priorité: **13.10.78 FR 7829267**

(43) Date de publication de la demande:
**17.02.82 Bulletin 82/7**

(45) Mention de la délivrance du brevet:
**27.03.85 Bulletin 85/13**

(84) Etats contractants désignés:
**BE DE GB IT NL**

(56) Documents cités:
**FR - A - 1 405 707**
**FR - A - 2 333 238**
**FR - A - 2 344 121**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Allemand, Robert, Chemin de Bouffière, F-38330 Saint-Ismier (FR)**
Inventeur: **Laval, Michel, Le Replat de Pinet, F-38410 Saint-Martin d'Uriage (FR)**

(74) Mandataire: **Mongrédien, André et al, c/o BREVATOME 25, rue de Ponthieu, F-75008 Paris (FR)**

## Description

La présente invention concerne un détecteur de rayonnement et notamment pour tomographies à rayons X.

De manière plus précise, cette invention s'applique à des détecteurs multicellulaires contenant un gaz à haute pression et destinés à être utilisés dans des systèmes tomographiques, comportant un calculateur par exemple. Dans un appareil de tomographie à rayons X comportant un calculateur, la distribution spatiale des intensités des rayons X ayant traversé l'objet à visualiser selon le plan de coupe et suivant des parcours différents, est traduite en signaux électriques qui sont traités pour permettre l'obtention d'une image de cet objet. Les détecteurs utilisés doivent détecter l'énergie électromagnétique, avec une résolution spatiale suffisante. La vitesse d'échantillonnage du signal fourni par les détecteurs est généralement limitée par le temps de relaxation de ces détecteurs. Il est donc nécessaire d'utiliser des détecteurs présentant des temps de relaxation faibles, une grande sensibilité et une très bonne résolution spatiale. On sait qu'un détecteur de type multicellulaire, comprenant une pluralité de cellules séparées spatialement, permet de réaliser un appareil de tomographie économique et efficace. Dans ce type de détecteur, la radiation X est détectée dans un gaz de masse atomique élevée sous haute pression. Les photons X interagissent avec le gaz pour produire des paires ions-électrons. Les électrons sont recueillis sur des électrodes, sous l'effet d'un champ électrique appliqué entre les électrodes et fournissent des courants électriques proportionnels à l'intensité des rayons X. Ces électrons sont recueillis sur des plaques ou électrodes positives alternant avec des plaques ou électrodes négatives sur lesquelles on recueille les ions. Les électrons et les ions positifs qui sont produits par l'interaction des photons X et du gaz se déplacent le long des lignes de force du champ électrique, et sont collectés sur les électrodes positives et négatives. La totalité des charges produites par l'interaction des rayons X avec le gaz doit être collectée en un temps aussi bref que possible, et surtout en un temps le plus uniforme possible dans le volume de la cellule de détection, de façon à ce que le signal correspondant à l'intervalle d'échantillonnage suivant, ne soit pas perturbé.

Généralement, les électrodes positives et négatives sont séparées par des isolants qui, malheureusement, présentent une très grande sensibilité aux radiations X, ce qui entraîne des phénomènes de conductions parasites importants. Cet inconvénient est aggravé par le fait que ces phénomènes ne sont pas répétitifs quantitativement et qu'ils présentent une importante persistance, après l'irradiation. En outre, la nécessité d'accroître la résolution spatiale pour améliorer la qualité de l'image obtenue nécessite de construire des détecteurs présentant un très grand nombre de cellules. Les appareils de tomographie les plus anciens présentaient environ 200 cellules de détection disposées en éventail sur un angle de 40°. Actuellement, il est nécessaire, dans le but d'accroître la qualité de l'image, de construire des appareils présentant 500 ou même 1000 cellules sur le même angle. Dans le but de diminuer sensiblement les courants de fuite dans les isolantes séparant les électrodes des détecteurs, on sait qu'il est possible d'employer des isolants de type minéral et en particulier des isolants en céramique; ces isolants peuvent être travaillés facilement, ce sont d'excellents isolants électriques, et ils sont dimensionnellement très stables; cependant, malgré toutes leurs qualités, ils ne permettent pas d'éliminer tous les problèmes causés par les courants de fuite. Ce type de détecteur est décrit dans le brevet français N° 1 405 707. L'amélioration éventuelle de ce type de détecteur consiste à supprimer l'isolant au sein de l'électrode et de reporter cet isolant, entre les électrodes aux extrémités haute et basse de celle-ci. Cette solution a cependant pour inconvénient de rendre les électrodes moins rigides, plus fragiles, ce qui peut entraîner des effets de microphonie, dus au manque de rigidité des électrodes. Ce type de détecteur est décrit notamment dans le brevet français N° 2 333 238.

Le principe de l'utilisation d'electrodes de garde dans des détecteurs de rayonnement est par ailleurs déjà connu (Cf FR-A-1 405 707 ou FR-A-2 344 121).

La présente invention a pour but de remédier à ces inconvénients et notamment de réaliser un détecteur de rayonnement, dans lequel les fuites de courant dans les isolants séparant les électrodes et dans les bornes de connexion de ces électrodes avec leur alimentation et avec les voies de mesure des courants ioniques ou électroniques, sont minimisées.

L'invention a pour objet un détecteur de rayonnement comprenant une chambre d'ionisation remplie d'un gaz donné et, dans cette chambre, des électrodes juxtaposées et séparées, formées de plaques successives de forme générale rectangulaire disposées en regard les unes des autres et parallèlement à la direction du rayonnement incident à détecter, ces plaques étant destinées à être portées à des potentiels tels que deux plaques successives sont respectivement portées à un premier et un deuxième potentiels, ces plaques étant supportées, à chacune de deux de leurs extrémités opposées parallèles à la direction du rayonnement incident à détecter, par au moins une barrette isolante, caractérisé en ce que lesdites plaques sont supportées, à chacune de leursdites extrémités opposées, par une pluralité de barrettes isolantes de forme substantiellement parallélépipédique, disposées côte à côte de façon à s'étendre perpendiculairement auxdites plaques tout en étant séparées les unes des autres, en ce que chaque plaque est découpée, à proximité de chaque dite pluralité de barrettes, de manière qu'une première moitié alternée de barrettes de chaque pluralité supporte, par chacune de ses faces en regard des extrémités correspondantes des plaques, toutes les plaques portées audit deuxième potentiel, et que la seconde moitié alternée de barrettes supporte, par chacune de ses faces en regard des extrémités correspondantes des plaques, toutes les plaques portées audit premier potentiel, et en ce que la face de chaque barrette opposée à celle supportant les plaques correspondantes est recouverte d'un dépôt conducteur qui recouvre également partiellement les deux autres faces latérales desdites barrettes tout en restant électriquement isolé desdites plaques correspondantes, ledit dépôt conducteur de chaque barrette étant destiné à être porté au même potentiel que celui des plaques supportées par la barrette correspondante, de manière à jouer le rôle d'un anneau de garde permettant d'éviter l'apparition de courants de fuite dans l'isolant desdites barrettes.

Selon une autre caractéristique, les barrettes adjacentes constitutives de chaque pluralité de barrettes sont mécaniquement liées entre elles par une colle électriquement isolante.

Les caractéristiques et avantages de l'invention ressortiront mieux de la description qui va suivre, donnée à titre illustratif, en référence aux dessins annexés, dans lesquels:

— la figure 1 représente un détecteur de rayonnement, conforme à l'invention;

— la figure 2 est une coupe transversale des barrettes supportant les plaques;

— la figure 3 est un schéma permettant de mieux comprendre le rôle des chicanes formées par les plaques, a proximité des barrettes isolantes;

— la figure 4 permet de mieux comprendre le rôle du dépôt conducteur formé sur les barrettes isolantes;

— la figure 5 représenté schématiquement un autre mode de réalisation d'un détecteur conforme à l'invention;

— la figure 6 est une coupe transversale des supports de plaques, pour cet autre mode de réalisation.

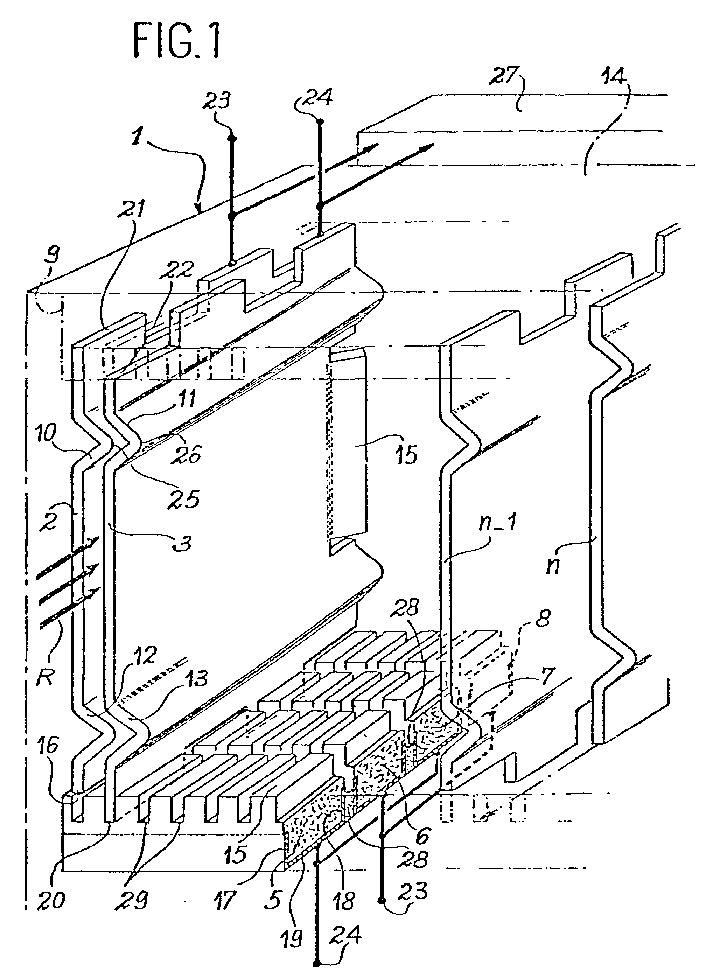

En référence à la figure 1, on a représenté un détecteur de rayonnement, conforme à l'invention. Ce détecteur comprend une chambre d'ionisation multicellulaire comportant une pluralité d'électrodes ayant la forme de plaques réunies alternativement à deux sources de potentiel; chaque cellule comprend une électrode et des électrodes situées de part et d'autre; du gaz est contenu dans les volumes formés entre ces électrodes. La chambre d'ionisation qui n'est pas représentée en détail sur la figure, peut être remplie de xénon sous pression, dans le cas où le rayonnement R est un rayonnement X. Toutes les électrodes 2 sont portées à un premier potentiel 23 positif par exemple, de manière à constituer des anodes; les électrodes 3 peuvent être portées à un second potentiel 24 nul ou négatif par exemple, pour constituer des cathodes. Toutes les électrodes 2 et toutes les électrodes 3 sont portées à leurs extrémités hautes et basses par des barrettes isolantes; du côté de l'extrémité basse des électrodes, ces barrettes isolantes sont représentées en 5, 6, 7, 8. Du côté de l'extrémité haute, ces barrettes isolantes sont représentées de manière schématique en 9. A proximité des barrettes isolantes, les plaques qui constituent les électrodes forment des chicanes telles que 10, 11, 12, 13 . . . Ces chicanes, comme on le verra plus loin en détail, sont destinées à protéger les barrettes contre les rayonnements X qui peuvent être émis en direction de l'isolant de ces barrettes et qui pourraient provoquer des courants de fuite dans cet isolant. Chaque plaque présente à l'opposé du côté qui reçoit le rayonnement R, un bord relevé 15. Ce bord relevé permet d'éviter que les rayons X incidents qui ne sont pas entièrement arrêtés par le gaz entre les électrodes viennent frapper le fond de la chambre d'ionisation. En effet, si l'ionisation du gaz contenu dans la chambre se produit près du fond de cette chambre, les ions crées à cet endroit se déplacent lentement et ne parviennent sur les cathodes que plusieurs dizaines de millise-condes. après le rayonnement X qui leur a donné naissance. Il peut en résulter un phénomène de traînage, d'autant plus important qu'une fraction des rayons X est détectée dans ce cas, en dehors de la zone de champ électrique uniforme. Ces bords relevés évitent donc toute ionisation, en dehors du champ électrique uniforme existant entre les électrodes. Ce bord relevé permet l'interception de la presque totalité des rayons X inutilisés et il a en outre pour avantage d'assurer une meilleure rigidité mécanique des plaques formant les électrodes. Du fait de cet accroissement de la rigidité mécanique des plaques, l'épaisseur de celles-ci peut être considérablement diminuée; il en résulte que le nombre de cellules de détection contenues dans la chambre d'ionisation peut être sensiblement accru et qu'ainsi la résolution spatiale de détecteur est augmentée.

Le nombre des barrettes isolantes qui supportent les électrodes a été limité à quatre sur la figure, pour simplifier la représentation. Ces barrettes sont partiellement sectionnées sur une face 15, en regard des côtés 16 correspondants des plaques, de manière à supporter ces plaques et à les séparer, par des tronçons isolants. Chacune des barrettes est recouverte d'un dépôt conducteur 19, sur une face opposée à la face 15, située en regard des plaques. Ce dépôt métallique recouvre aussi partiellement les côtés 17, 18 des barrettes, adjacents à la face de la barrette recouverte par le dépôt conducteur 16. Les extrémités 16, 20, 21, 22 . . . des plaques, situées à proximité des barrettes sont découpées de manière que la barrette 6, par exemple, supporte toutes les plaques 2 portiées au même premier potentiel positif 23 et une barrette adjacente telle que 5 supporte toutes les plaques 3, portées au deuxième potentiel négatif 24. De la même manière, dans l'exemple de réalisation représenté sur la figure, la barrette 8 supporte toutes les plaques 2 portées au premier potentiel positif 23. Les dépôts métalliques tels que 17, 18, 19 qui recouvrent les barrettes sont portés au même potentiel que celui des plaques supportées par les barrettes correspondantes. C'est ainsi que dans l'exemple de réalisation représenté sur la figure, le dépôt métallique 17, 18, 19 recouvrant la barrette 5 et le dépôt métallique recouvrant la barrette 7 sont portés au même potentiel que celui des plaques correspondantes 3, c'est-à-dire au deuxième potentiel 24. De la même manière, les dépôts métalliques recouvrant les barrettes 6, 8 sont portés au même potentiel que celui des plaques 2, c'est-à-dire au potentiel 23. Ainsi, grâce au découpage des extrémités des plaques, à proximité des barrettes, tel que cela apparaît clairement en 21, 22 chaque plaque est correctement fixée sur les barrettes et est isolée de la plaque suivante. Comme on le verra par la suite, les dépôts métalliques qui recouvrent chacune des barrettes permettent de diminuer les courants de fuite dans l'isolant des barrettes. Cette diminution résulte de la présence du dépôt conducteur métallique qui crée un système d'anneau de garde, à proximité de l'extrémité de chacune des barrettes.

Les chicanes telles que 10, 11, 12, 13 ont un profil en V; ce V est saillant sur une face de chaque plaque et rentrant sur l'autre face, de sorte que le sommet 25 du V saillant sur une plaque, s'engage dans la base 26 du V rentrant de la plaque suivante afin d'obstruer complètement l'intervalle entre les deux plaques.

On a également représenté de manière non détaillée des moyens 27 aptes à recueillir et à traiter les signaux en provenance des différentes électrodes; ces signaux permettent de visualiser la coupe d'un organe situé en avant du détecteur et qui est traversé par les rayons X; après absorption partielle par l'organe, les rayons X viennent frapper le détecteur. Les moyens 27 qui permettent cette visualisation sont bien connus dans l'état de la technique et n'ont pas été représentés en détail.

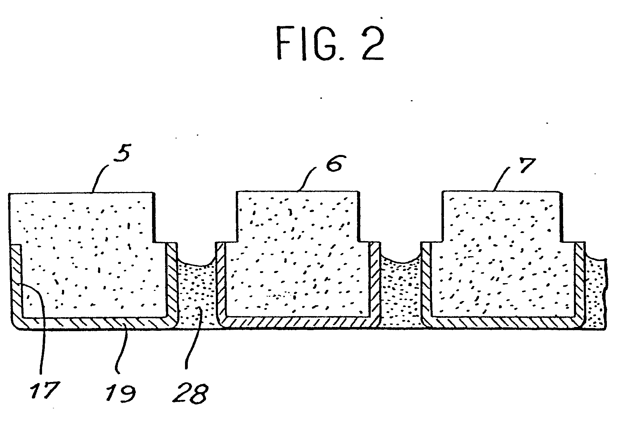

La figure 2 est une coupe transversale des barrettes conformes à l'invention et qui supportent les plaques à l'une de leurs extrémités.

Les différentes barrettes isolantes sont rendues solidaires grâce à des couches isolantes de résine Epoxy, telles que la couche 28. Ces couches de résine ont un niveau qui est inférieur au rebord des dépôts conducteurs 17, 18 de manière que la résine ne soit pas en contact avec les barrettes isolantes 5, 6, 7 et 8. Le montage du détecteur peut être réalisé de la manière suivante; chacune des barrettes est recouverte des dépôts conducteurs 17, 18, 19 constitués par exemple par une peinture d'argent, puis les différentes barrettes sont rendues solidaires grâce aux couches 28 de résine Epoxy. Enfin, les barrettes sont partiellement sectionnées par des rainures telles que 29, puis les différentes plaques correctement découpées sont mises en place sur les supports hauts et bas ainsi réalisés par cet assemblage de barrettes rainurées.

Il est bien évident que les rainures de positionnement de chaque plaque pourraient être réalisées préalablement au collage des barrettes. Dans ce cas, les barrettes ne présentent des rainures qu'en regard des plaques qu'elles supportent.

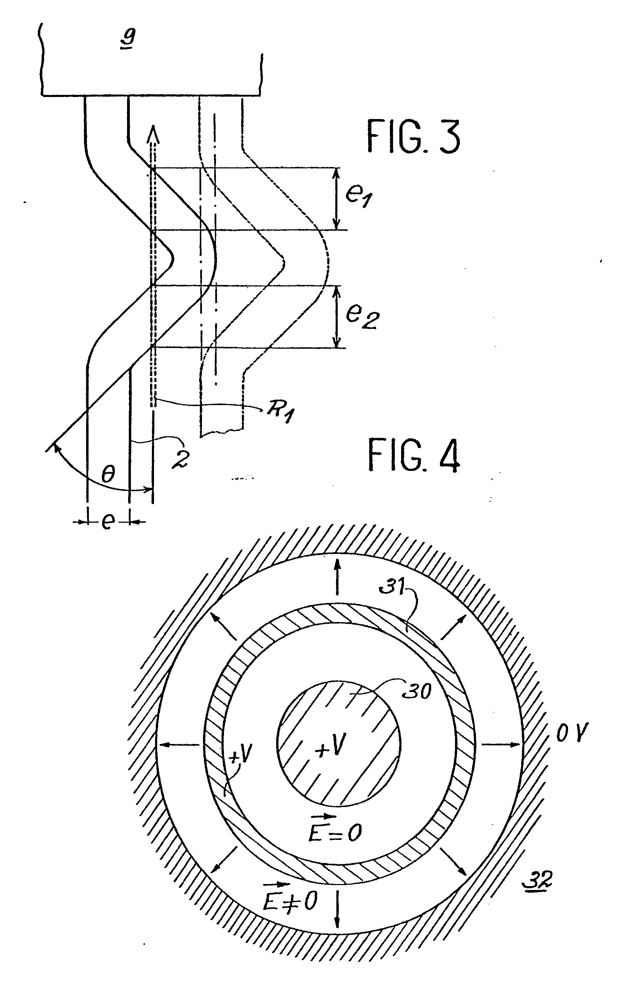

En référence à la figure 3, on a représenté l'une des chicanes 10 de la plaque 2 par exemple. Cette chicane a le profil d'une moulure en V et s'étend dans la direction du rayonnement R, parallèlement au plan formé par les faces des barrettes qui supportent les plaques. On a représenté schématiquement en 9, l'une des barrettes situées à proximité de cette extrémité de la plaque 2. Des rayons X qui ne suivent pas le trajet des rayons incidents R peuvent être émis dans la direction $R_1$, vers la barrette 9 supportant les électrodes. Cette émission peut résulter, soit d'une diffusion de certains rayons dans le gaz contenu dans la chambre, soit d'une fluorescence du gaz de détection. Les rayons X diffusés dans le gaz sont très peu nombreux, mais présentent une forte énergie. Les rayons X de fluorescence sont par contre très nombreux mais leur énergie est faible. Les rayons diffusé ou de fluorescence sont totalement arrétés par les chicanes. En effet, si l'on désigne par $\theta$ l'angle d'incidence d'un rayon parasite avec les branches du V de la chicane 10, l'épaisseur totale $e_t$ que devra traverser le rayon X au niveau de la chicane sera égale à la somme des distances $e_1$ et $e_2$ parcourues par ce rayon dans la masse de la plaque 10. On peut donc écrire $e_t = e_1 + e_2$ et, par approximation

$$e_t = \frac{2e}{\text{sinus } \theta},$$

si e désigne l'épaisseur de la plaque 2. Il résulte de ces observations que les rayons X diffusés ou de fluorescence ne peuvent atteindre la barrette isolante 9, du fait de l'importance de l'épaisseur $e_t$ totale de la plaque à l'endroit considéré. La forme en chicane, à proximité des barrettes isolantes, empêche donc les rayons X ou de fluorescence ou diffusés d'atteindre les barrettes isolantes et ainsi évite l'apparition de courants de fuite dans ces barrettes.

La figure 4 est une illustration du principe de fonctionnement d'un anneau de garde, dans le domaine de l'électrostatique. On suppose sur cette figure qu'un conducteur central 30 est porté à un potentiel +V pa rapport à un potentiel de référence; ce conducteur central est entouré par une autre conducteur 31 porté au potentiel +V par rapport au potentiel de référence; le potentiel de référence est celui de la masse extérieure 32, supposée portée au potentiel 0 volt. Le conducteur coaxial 31 est isolé du conducteur central 30; ce conducteur coaxial joue le rôle d'anneau de garde pour le conducteur central puisque le champ électrique E entre ce conducteur central et l'anneau de garde est nul; en effet, le conducteur central et le conducteur coaxial sont portés au même potentiel par rapport au potentiel de référence de la masse extérieure et un champ électrique non nul n'apparaît qu'à l'extérieur de l'anneau de garde, entre cet anneau et la masse extérieure 32. Il résulte de ce principe, que si l'on se reporte à la figure 1, la couche conductrice 19, portée au même potentiel que celui de l'électrode supportée par la barrette correspondante, joue le rôle d'anneau de garde pour cette électrode. Le champ électrique est donc nul entre les électrodes 3, portées par la barrette 5 et la couche conductrice 19, dans le mode de réalisation représenté sur la figure 1.

De la même manière, le champ électrique est nul entre la couche conductrice recouvrant la barrette 6 et les électrodes 2, entre la couche conductrice recouvrant la barrette 7 et les électrodes 3, et entre la couche conductrice recouvrant la barrette 8 et les électrodes 2. Il en résulte qu'aucun courant de fuite n'apparaît dans l'isolant des barrettes, ni entre électrodes portées à des potentiels différents, ni entre chaque électrode et le potentiel de référence.

Dans l'exemple de réalisation qui vient d'être décrit, les barrettes isolantes peuvent être réalisées dans des barreaux de céramique qui sont d'excellents isolants électriques, dimensionnellement très stables et facilement usinables avec un outillage classique. Les électrodes sont réalisées préférentiellement en un matériau dense présentant un numéro atomique élève, de façon à constituer un bon écran aux rayons X entre chaque cellule. Ce matériau peut être par exemple du tungstène.

Grâce au détecteur qui vient d'être décrit, il est possible d'atteindre les buts mentionnés plus haut, c'est-à-dire d'éviter tout courant de fuite dans les isolants supportant les électrodes. Le détecteur décrit en exemple permet aussi d'éviter tout phénomène de traînage à l'arrière des électrodes, d'assurer une bonne rigidité mécanique de ces électrodes et ainsi, de réaliser un détecteur présentant 500 et même 1000 cellules de détection sur un angle de 40°.

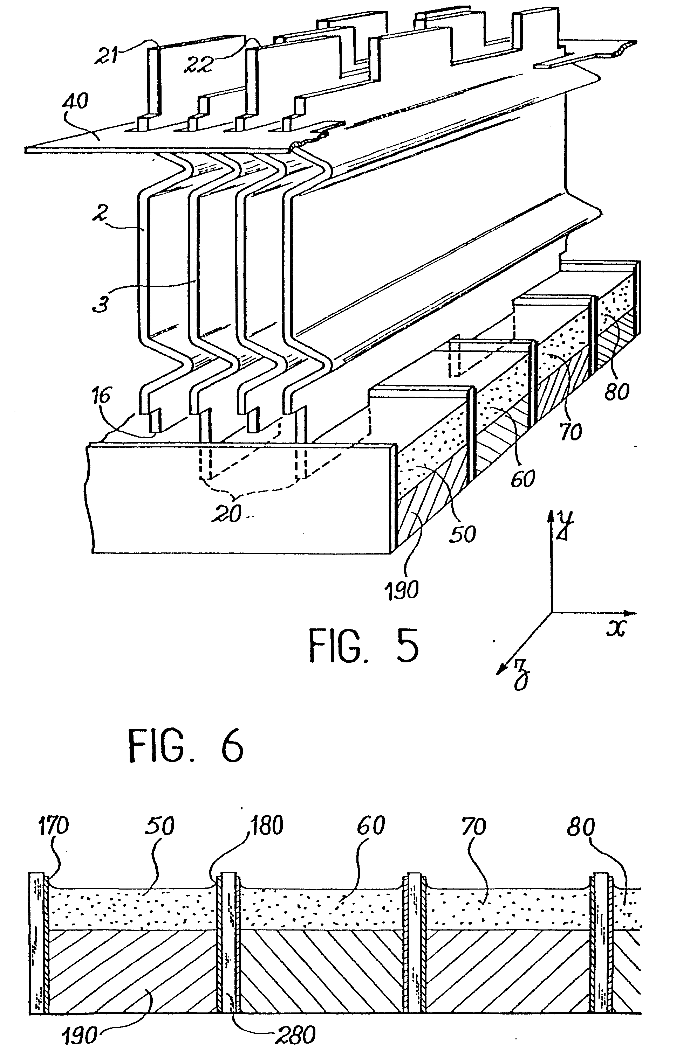

La figure 5 représente schématiquement un autre mode de réalisation du détecteur conforme à l'invention. La figure 6 représente les supports des plaques, en coupe transversale, dans cet autre mode de réalisation. Selon cet autre mode de réalisation, les barrettes isolantes 5, 6, 7 et 8 de la figure 1, qui étaient constituées de céramique par exemple, sont remplacées par des coulées de résine isolante 50, 60, 70, 80.

Les couches conductrices 17, 18, 19 et la couche de résine 28, sont remplacées par des couches de cuivre 170, 180, par une barre conductrice 190 et par des plaques 280 de verre Epoxy par exemple. Les couches conductrices 170, 180 et la barre métallique 190, jouent, comme précédemment, le rôle d'anneau de garde autour des barrettes isolantes constituées ici par les coulées de résine isolante 50, 60, 70, 80.

La structure des supports des plaques, dans ce mode de réalisation de l'invention, représenté sur les figures 5 et 6, permet de simplifier le montage du détecteur; en effet, dans le mode de réalisation décrit sur la figure 1, la précision qui est nécessaire pour le positionnement des plaques, entraîne un usinage onéreux des barrettes isolantes en céramique. Dans le mode de réalisation décrit sur les figures 5 et 6, les barrettes en céramique sont remplacées par de la résine, de type Epoxy par exemple, chargée ou non. Le positionnement et le maintien des plaques sont assurés par un montage extérieur tant que la résine n'est pas polymérisée. Ce montage extérieur est représenté partiellement en 40 sur la figure 5. Il est constitué par un gabarit 40 qui permet de maintenir l'écartement entre les plaques, dans la direction Ox, durant la polymérisation de la résine. D'autres gabarits, non représentés sur la figure et s'appuyant sur des épaulements situés aux extrémités des barrettes, permettent de positionner les plaques dans la direction Oy et Oz, durant la polymérisation de la résine.

La plaque 280, de verre Epoxy, qui supporte les couches de cuivre 170, 180 joue le même rôle que la couche de résine 28 de la figure 2. La précision du positionnement de plaques, est donnée par le gabarit 40 dont les encoches peuvent être réalisées à partir de techniques photographiques très précises telles que la photogravure ou l'électro-déposition.

Bien entendu, les plaques 2, 3 ... pourraient comporter, comme dans le mode de réalisation précédent, des bords relevés.

## Revendications

1. Détecteur de rayonnement comprenant une chambre d'ionisation remplie d'un gaz donné et, dans cette chambre, des électrodes (2, 3, ...) juxtaposées et séparées, formées de plaques successives de forme générale rectangulaire disposées en regard les unes des autres et parallèlement à la direction du rayonnement incident (R) à détecter, ces plaques étant destinées à être portées à des potentiels tels que deux plaques successives (2, 3) sont respectivement portées à un premier (23) et un deuxième (24) potentiels, ces plaques étant supportées, à chacune de deux de leurs extrémités (16, 20, 21, 22, ...) opposées parallèles à la direction du rayonnement incident à détecter, par au moins une barrette isolante (5, 6, 7, 8, 9), caractérisé en ce que lesdites plaques sont supportées, à chacune de leursdites extrémités opposées, par une pluralité de barrettes isolantes (5, 6, 7, 8) de forme substantiellement parallélépipédique, disposées côte à côte de façon à s'étendre perpendiculairement auxdites plaques tout en étant séparées les unes des autres, en ce que chaque plaque est découpée, à proximité de chaque dite pluralité de barrettes, de manière qu'une première moitié alternée (5, 7) de barrettes de chaque pluralité supporte, par chacune de ses faces (15) en regard des extrémités correspondantes des plaques, toutes les plaques (3) portées audit deuxième potentiel (24), et que la seconde moitié alternée (6, 8) de barrettes supporte, par chacune de ses faces (15) en regard des extrémités correspondantes des plaques, toutes les plaques (2) portées audit premier potentiel (23), et en ce que la face de chaque barrette opposée à celle (15) supportant les plaques correspondantes est recouverte d'un dépôt conducteur (19) qui recouvre également partiellement les deux autres faces latérales (17, 18) desdites barrettes tout en restant électriquement isolé desdites plaques correspondantes, ledit dépôt conducteur de chaque barrette étant destiné à être porté au même potentiel que celui des plaques supportées par la barrette correspondante, de manière à jouer le rôle d'un anneau de garde permettant d'éviter l'apparition de courants de fuite dans l'isolant desdites barrettes.

2. Détecteur selon la revendication 1, caractérisé en ce que les barrettes adjacentes constitutives de chaque pluralité de barrettes sont mécaniquement liées entre elles par une colle électriquement isolante (28).


**Patentansprüche**

1. Strahlungsdetektor, enthaltend eine Ionisationskammer, die mit einem gegebenen Gas gefüllt ist, und in dieser Kammer nebeneinander und getrennt angeordnete Elektroden (2, 3, . . .), die aus aufeinanderfolgenden Platten von im allgemeinen rechteckiger Gestalt gebildet sind, einander gegenüberstehen und parallel zur Richtung der einfallenden, zu detektierenden Strahlung (R) ausgerichtet sind, wobei die Platten dazu bestimmt sind, auf Potentialen so gehalten zu werden, daß zwei aufeinanderfolgende Platten (2, 3) entsprechend auf einem ersten (23) und einem zweiten (24) Potential gehalten sind, diese Platten jeweils an zwei ihrer Enden (16, 20, 21, 22 . . .), die der Richtung der einfallenden, zu detektierenden Strahlung parallel gegenüberstehen, von wenigstens einer isolierenden Schiene (5, 6, 7, 8, 9) gehalten werden, dadurch gekennzeichnet, daß die Platten an jedem ihrer genannten gegenüberliegenden Enden von einer Mehrzahl von isolierenden Schienen (5, 6, 7, 8) von im wesentlichen quaderförmiger Gestalt gehalten werden, die Seite an Seite so angeordnet sind, daß sie sich senkrecht zu den Platten erstrecken und dabei völlig voneinander getrennt sind, und daß jede Platte in der Nachbarschaft zu jeder dieser Schienen so ausgeschnitten ist, daß eine erste abwechselnde Hälfte (5, 7) der Schienen jeder Vielzahl mit einer ihrer den entsprechenden Enden der Platten gegenüberstehenden Flächen (15) alle die Platten (3) unterstützt, die auf dem genannten zweiten Potential (24) gehalten sind, und daß die zweite abwechselnde Hälfte (6, 8) der Schienen mit jeder ihrer den entsprechenden Enden der Platten gegenüberstehenden Flächen (15) alle die Platten (2) unterstützt, die auf dem genannten ersten Potential (23) gehalten sind, und daß die Fläche jeder Schiene, diejener (15) gegenübersteht, die die entsprechenden Latten trägt, mit einem Leiterbelag (19) bedeckt ist, der auch teilweise die zwei anderen Längsseiten (17, 18) der Schienen bedeckt, dabei jedoch von den entsprechenden Platten vollkommen elektrisch isoliert bleibt, wobei der Leiterbelag einer jeden Schiene dazu bestimmt ist, auf demselben Potential gehalten zu werden, wie das der von der entsprechenden Schiene getragenen Platten, um auf diese Weise die Aufgabe eines Schutzringes zu übernehmen, der es erlaubt, das Auftreten von Leckströmen im Isolator der Schienen zu verhindern.

2. Detektor nach Anspruch 1, dadurch gekennzeichnet, daß die benachbarten Schienen, die jede Vielzahl von Schienen bilden, mechanisch miteinander durch einen elektrisch isolierenden Klebstoff (28) verbunden sind.


**Claims**

1. Radiation detector comprising an ionization chamber filled with a predetermined gas, and, within said chamber, juxtaposed separate electrodes (2, 3, . . .), formed of successive plates having a generally rectangular form disposed facing one another and parallel to the direction of incident radiation (R) to be detected, said plates being adapted to be brought to potentials such that two successive plates (2, 3) are respectively brought to a first (23) and a second (24) potential, said plates being supported, at each of two opposed ends (16, 20, 21, 22, . . .) parallel to the direction of incident radiation to be detected, by at least one insulating bar (5, 6, 7, 8, 9), characterized in that said plates are supported, at each of their said opposed ends, by a plurality of insulating bars (5, 6, 7, 8) of substantially parallelepipedal form, disposed side by side whereby to extend perpendicularly to said plates and separating them from one another, and in that each plate is cut out, near each of said plurality of bars, whereby a first alternate moiety (5, 7) of bars of each plurality supports, by each of its surfaces (15) facing corresponding ends of the plates, all the plates (3) brought to said second potential (24), and in that the second alternate moiety (6, 8) of bars supports, by each of its surfaces (15) facing the corresponding ends of the plates, all the plates (2) brought to said first potential (23), and in that the opposite surface of each bar to that (15) supporting the corresponding plates is covered by a conductive layer (19) which also partially covers the two other side surfaces (17, 18) of said bars, while remaining electrically insulated from said corresponding plates, said conductive layer of each bar being adapted to be brought to the same potential as that of the plates supported by the corresponding bar, whereby to act as a guard ring suppressing leakage currents in the insulation of said bars.

2. Detector according to Claim 1, characterized in that said adjacent bars comprising each plurality of bars are mechanically interconnected by an electrically insulating adhesive (28).

# FIG. 1

# FIG. 2

FIG. 3

FIG. 4

FIG. 5

FIG. 6